# EUROPÄISCHE PATENTANMELDUNG

(11) **EP 2 194 163 A1**
(43) Veröffentlichungstag der Anmeldung: **09.06.2010**
(21) Anmeldenummer: 08020902.6
(22) Anmeldetag: 02.12.2008
(51) Int. Cl.: C23C 28/00, C23C 28/04, G01N 21/65, G01B 11/16

(54) **Keramische Wärmedämmschichten mit Aluminiumoxidteilchen und Verfahren zur Charakterisierung einer solchen Wärmedämmschicht**

(71) Anmelder: Siemens Aktiengesellschaft, 80333 München (DE)
(72) Erfinder: Casu, Alessandro, 47057 Duisburg (DE); Schumann, Eckart, Dr., 45468 Mülheim an der Ruhr (DE)

(57) **Zusammenfassung**

Bisher ist es nicht möglich, den Dehnungszustand von Wärmedämmschichten zerstörungsfrei zu prüfen.

Durch das Einbringen von Teilchen (16) in die Wärmedämmschicht (10) kann der Dehnungszustand dieser Teilchen (16) detektiert werden als ein Maß für den Dehnungszustand der Wärmedämmschicht (10).

## Beschreibung

Die Erfindung betrifft eine keramische Wärmedämmschicht mit Aluminiumoxidteilchen und ein Verfahren zur Charakterisierung einer solchen Wärmedämmschicht.

Während der Beschichtung von Gasturbinenschaufeln und anderen Bauteilen, insbesondere heißgasführender Komponenten mit keramischen Wärmedammschichten (WDS) können Dehnungen verursacht werden, die im schlimmsten Fall zu Defekten in der Schicht, wie Risse, Delaminationen führen. Der Nachweis solcher Dehnungen ist mit den zur Verfügung stehenden nichtzerstörenden Analysemethoden nicht möglich.

Es ist daher Aufgabe der Erfindung das Verfahren zu vereinfachen.
Die Aufgabe wird gelöst durch eine Schicht gemäß Anspruch 1 und ein Verfahren gemäß Anspruch 7.

In den Unteransprüchen sind weitere vorteilhafte Maßnahmen aufgelistet, die beliebig miteinander kombiniert werden können, um weitere Vorteile zu erzielen.

Es wird vorgeschlagen während der Beschichtung kleine Aluminiumoxidteilchen in die keramische Wärmedammschicht einzubauen. Die Wärmedämmschicht selbst kann aus verschiedenen keramischen Materialien bestehen. Das Einbringen der Aluminiumoxidteilchen (Al₂O₃) erfolgt beim Beschichten selbst. Beim thermischen Spritzen werden durch zwei unterschiedliche Pulverförderer z.B. das keramische Wärmedämmschichtmaterial und Al₂O₃ Partikel gleichzeitig in das Plasma eingedüst.

Durch Raman-Spektroskopie kann der Dehnungszustand von Teilchen, insbesondere der Aluminiumoxidteilchen in der Wärmedämmschicht bestimmt werden. Die Al₂O₃-Teilchen dienen dadurch als Dehnungssensoren für die WDS. Die Dehnungsmessung kann unmittelbar während des Aufbringens der Beschichtung (vorzugsweise Plasmaspritzen) oder nach dem Beschichtungsprozess zur Qualitätssicherung eingesetzt werden. Eine weitere Anwendung ist die Beurteilung von Wärmedämmschichten auf betriebsbeanspruchten Schaufeln.

Es ist möglich den Dehnungszustand der Wärmedämmschicht nichtzerstörend zu bestimmen. Das ermöglicht eine umfassende Belastungsanalyse der WDS während der Beschichtung und bei betriebsbeanspruchten Bauteilen. Bei betriebsbeanspruchten Bauteilen können zusätzlich lebensdauerrelevante Informationen gewonnen werden.

Es zeigen:
- Figur 1, 2: Ausführungsbeispiele einer solchen Schicht,
- Figur 3: eine Anordnung zur Charakterisierung einer solchen Schicht,
- Figur 4: eine Gasturbine,
- Figur 5: eine Turbinenschaufel,
- Figur 6: eine Brennkammer und
- Figur 7: eine Liste von Superlegierungen.

Die Beschreibung der Figuren stellen nur Ausführungsbeispiele der Erfindung dar.

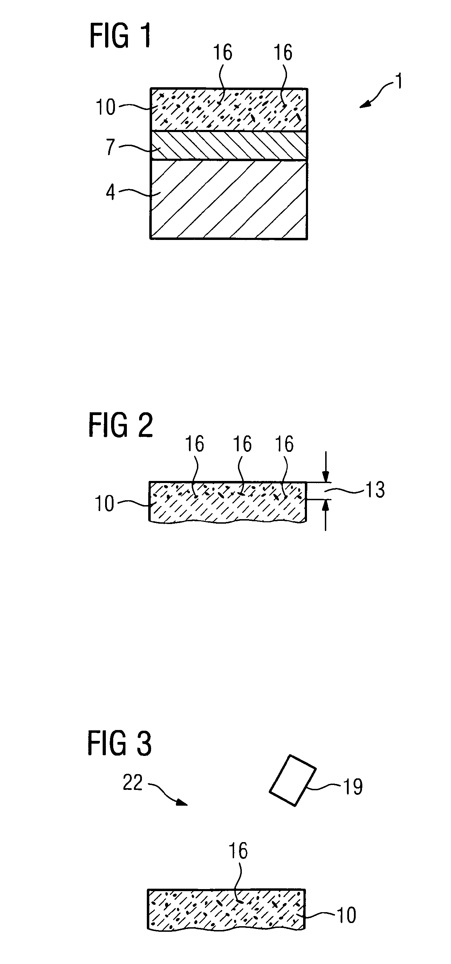

In Figur 1 ist ein Bauteil 1, 120, 130, 155 gezeigt, das ein Substrat 4 vorzugsweise aus einer Nickelbasissuperlegierung (Fig. 7) aufweist.
Vorzugsweise ist auf dem Substrat 4 eine metallische Haftvermittlerschicht 7, vorzugsweise aus einer MCrAlY-Legierung aufgebracht.

Auf dieser MCrAlY-Schicht 7 bildet sich noch eine Aluminiumoxidschicht (nicht dargestellt).
Auf dieser Haftvermittlerschicht ist eine äußere keramische Schicht 10 (Wärmedämmschicht) aufgebracht. Es können noch weitere Schichten (Erosionschutzschichten) auf der keramischen Schicht 10 vorhanden, die das Signal (siehe unten) aber nicht zu stark abschwächen dürfen.
Insbesondere ist dies die äußerste keramische Schicht 10, die mit dem Heißgas direkt in Berührung kommt.
Bei gewissen Bauteilen kann die keramische Schicht 10 auch direkt auf dem Substrat 4 aufgebracht sein, wobei sich dann auch wieder sich eine Aluminiumoxid-Schicht zwischen dem Substrat 4 und der Wärmedämmschicht 10 bildet.
Die Wärmedämmschicht 10 kann die Materialien Yttriumstabilisiertes Zirkonoxid, vorzugsweise auch aufgebracht mittels EPBVD-Verfahren, also in stengelförmiger Form hergestellt, Gadoliniumzirkonat oder Gadoliniumhafnat, also Pyrochlore aufweisen.
Besonders vorzugsweise wird die keramische Schicht 10 mittels Plasmaspritzen oder HVOF aufgebracht.

Die keramische Schicht 10 weist Teilchen 16 aus Aluminiumoxid auf, aber nicht mehr als 50vol%, insbesondere maximal 40vol%, ganz insbesondere maximal 30vol%.
Der minimale Anteil beträgt 1vol%, insbesondere mindestens 5vol%.
Die Aluminiumoxid sind vorteilhafterweise in der gesamten Schicht 10 verteilt, insbesondere gleichmäßig.

Beim thermischen Spritzen zum Beispiel werden durch zwei unterschiedliche Pulverförderer das Matrixmaterial, also Zirkonoxid und Aluminiumoxidpartikel gleichzeitig als Plasma eingedüst.

Die Teilchen haben zu 90% eine Korngröße von bis zu 15µm, insbesondere zu 90% von 1µm bis 15µm, ganz insbesondere nur Korngrößen von 1µm bis 15µm.

Figur 2 zeigt eine weitere Schicht 10 wobei nur in einem äußeren Randbereich 13, vorzugsweise maximal in der oberen Hälfte, die an Aluminiumoxidpartikel 16 vorhanden sind und nahe des Substrats 4 oder der Haftvermittlerschicht 7 keine Teilchen 16 eingebracht sind.
Ebenso können bei zweilagigen (verschiedene Materialien aufweisend) keramischen Schichten als Wärmedämmschicht die Aluminiumoxidteilchen 16 nur in der äußersten der zweischichtigen keramischen Schicht vorhanden sein.

Der Grund dafür wird deutlicher bei der Beschreibung des nachfolgend beschriebenen Verfahrens gemäß Figur 3. Die Teilchen 16 können aber auch in der gesamten äußeren Schicht 16 verteilt sein.
Die Teilchen 16 sind vorzugsweise homogen verteilt.

Figur 3 ist eine Anordnung 22 zur Raman-Spektroskopie gezeigt.
Durch die Raman-Spektroskopie kann der Dehnungszustand der Teilchen 16, insbesondere die Aluminiumoxidteilchen 16 in der keramischen Wärmedämmschicht 10 mittels eines Raman-Spektrometers 19 bei hohen Temperaturen bestimmt werden. Direkt mit dem Zirkonoxid kann die Raman-Spektroskopie nicht eingesetzt werden, da diese Keramik mit dem verwendeten Laser nicht detektierbar ist.
Die Aluminiumoxidteilchen 16 dienen dadurch als Dehnungssensoren für die Wärmedämmschicht 10.
Vorzugsweise kann die Dehnungsmessung unmittelbar während des Aufbringens der Beschichtung nach dem Beschichtungsprozess oder nach dem Beschichtungsprozess zur Qualitätssicherung eingesetzt werden.

Eine weitere Anwendung ist die Beurteilung von Wärmedämmschichten auf betriebsbeanspruchten Schaufeln. Mit den vorgeschlagenen Verfahren kann der Dehnungszustand der Wärmedämmschicht nach einem Betrieb charakterisiert werden und eine Entscheidung darüber getroffen werden, ob diese Wärmedämmschicht ersetzt werden muss oder um zu prüfen, wieweit die Lebensdauermodelle den Zustand richtig beschreiben.

Damit ist es möglich, den Dehnungszustand der Wärmedämmschicht 10 nichtzerstörend zu bestimmen.

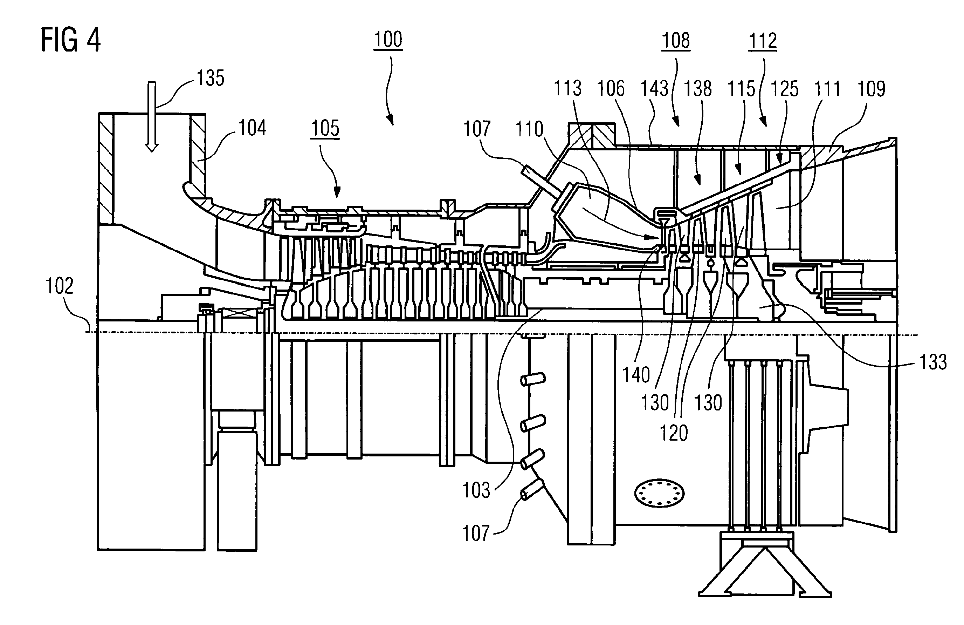

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

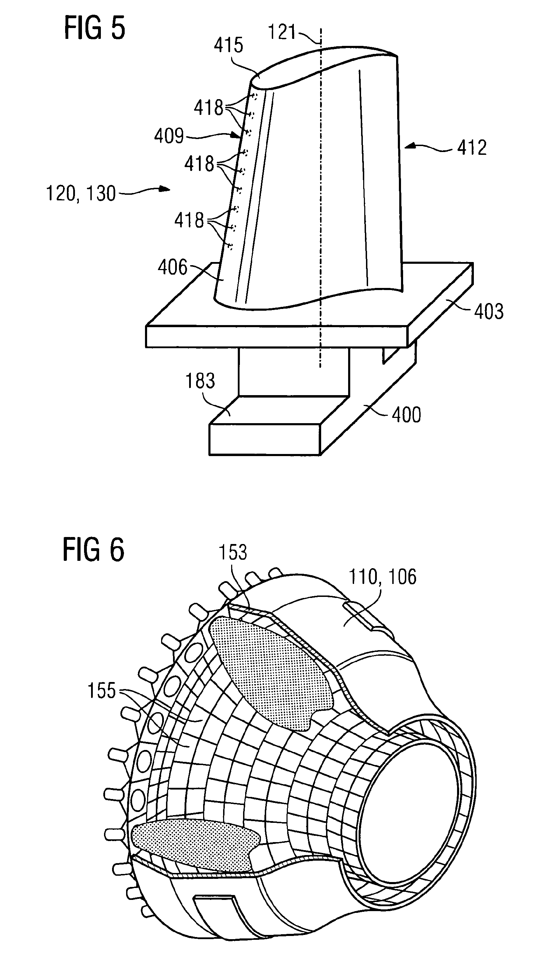

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Bauteil (120, 130, 155)
aufweisend ein
Substrat (4) und
eine äußere keramische Schicht (10),
insbesondere einer äußersten keramischen Schicht (10),
wobei die keramische Schicht (10) Aluminiumoxidteilchen (16) aufweist.

2. Bauteil nach Anspruch 1,
wobei die Teilchen (16) nur in einem äußeren Bereich (13) der einen keramischen Schicht (10) vorhanden sind.

3. Bauteil nach Anspruch 1 oder 2,
bei dem die keramische Schicht (10) zweischichtig ist, und bei dem die Teilchen (16) nur in der äußeren der beiden keramischen Schichten vorhanden sind.

4. Bauteil nach Anspruch 1, 2 oder 3,
bei dem das Material der Wärmedämmschicht (10) Zirkonoxid aufweist.

5. Bauteil nach Anspruch 1, 2 oder 3,
bei dem das Material für die keramische Schicht (10) ein Pyrochlor aufweist,
insbesondere Gadoliniumzirkonat oder Gadoliniumhafnat.

6. Bauteil nach Anspruch 1,
bei dem die Teilchen zu 90% eine Korngröße bis zu 15µm aufweisen,
insbesondere zu 90% von 1µm bis 15µm.

7. Verfahren zur Charakterisierung eines Bauteils mit einer keramischen Schicht (10),
insbesondere nach Anspruch 1, 2, 3, 4, 5 oder 6,
bei dem mittels Raman-Spektroskopie der Dehnungszustand von Teilchen (16) bestimmt wird und
eine Aussage über die Dehnungsverhältnisse der keramischen Schicht (10) getroffen werden kann.

8. Verfahren nach Anspruch 7,
bei dem die Teilchen (16) Aluminiumoxid aufweisen, insbesondere daraus bestehen.

9. Verfahren nach Anspruch 7 oder 8,
bei dem die Charakterisierung vor dem ersten Einsatz, insbesondere nach der Herstellung des Bauteils (120, 130, 155) durchgeführt wird.

10. Verfahren nach Anspruch 7 oder 8,
bei dem die Charakterisierung während,
insbesondere nach dem Einsatz des Bauteils (120, 130, 155) durchgeführt wird.
